# EUROPÄISCHE PATENTSCHRIFT

(11) **EP 0 776 825 B1**
(45) Veröffentlichungstag und Bekanntmachung des Hinweises auf die Patenterteilung: **26.06.2002**
(21) Anmeldenummer: 94927125.8
(22) Anmeldetag: 19.08.1994
(51) Int. Cl.: B64F 1/18, B64D 45/08

(54) **NAVIGATIONSSYSTEM FÜR LUFTFAHRZEUG**
AIRCRAFT NAVIGATION SYSTEM
SYSTEME DE NAVIGATION POUR AERONEF

(43) Veröffentlichungstag der Anmeldung: 04.06.1997
(73) Patentinhaber: Safyan, Anatolii Dimitrivich, 113648 Moskau (RU); Safyan, Dimitrii Anatolievich, 195253 Sankt Petersburg (RU)
(72) Erfinder: SAFYAN, Dmitry Anatolievich, St. Petersburg, 195253 (RU)
(74) Vertreter: Kruspig, Volkmar, Dipl.-Ing.
(86) Internationale Anmeldenummer: RU9400196
(87) Internationale Veröffentlichungsnummer: WO9606008

(56) Entgegenhaltungen:
- DE-A- 2 324 267
- DE-A- 3 629 911
- DE-A- 3 927 851
- DE-B- 1 506 005
- GB-A- 1 503 646
- US-A- 3 610 930
- US-A- 4 385 354
- US-A- 5 123 615

## Beschreibung

Die Erfindung betrifft ein Flugzeugnavigationssystem mit TV-Kamera, welches in automatischen Steuerungen für Rollen, Start und Landung von Flugzeugen verschiedener Klassen auf der Verkehrsstart- und -landebahn (SLB) und während des Startes und der Landung unter schwierigen Wetterbedingungen angewendet werden kann.

Es sind Systeme für Rollen, Start und Landung von Flugzeugen bekannt, welche eine Bodenausrüstung mit einer Anzahl äquidistant längs beider Seiten der SLB angeordneter Blinkleuchten mit einer Strahlungswellenlänge im sichtbaren Wellenlängenbereich umfassen. Derartige Systeme besitzen eine Flugzeugbordausrüstung mit einer Fernsehkamera und eine Anzeigeeinheit zur Informationsdarstellung.

Der Mangel der bekannten Systeme besteht in der unzureichenden Sicherheit für den Rollweg bei Start und Landung wegen fehlender oder eingeschränkter Sicht auf die Blinkleuchten der Landebahnbefeuerung bei schwierigen Wetterbedingungen. Darüber hinaus besteht ein Informationsmangel hinsichtlich der räumlichen Lage und zu den quantitativen Parametern der Flugzeugbewegung.

Es ist daher Aufgabe der Erfindung, ein verbessertes Flugzeugnavigationssystem mit TV-Kamera anzugeben, welches die Sicherheit unter Schlechtwetterbedingungen erhöht.

Die Lösung der Aufgabe der Erfindung erfolgt mit einem Gegenstand gemäß Patentanspruch.

Der Grundgedanke der Erfindung besteht in der Erhöhung der Genauigkeit und Betriebszuverlässigkeit des Flugzeugnavigationssystems mit TV-Kamera aufgrund der Gewährleistung der Synchronität zwischen der Taktfrequenz der verwendeten TV-Kamera der Flugzeugbordausrüstung mit der Frequenz des Blinkgenerators aus der Bodenausrüstung. Die erforderliche Synchronisation oder Synchronität wird ohne Verwendung einer Funkdatenübertragung erreicht. Durch die vorstehende selbstsynchronisierende Taktfrequenz der TV-Kamera erfolgt eine Erhöhung der Genauigkeit bei der Bestimmung von Korridoren für den Piloten bei Rollen, Start und Landung eines Flugzeuges.

Die erfindungsgemäße Lösung wird dadurch erreicht, daß das Flugzeugnavigationssystem für Rollen, Start und Landung bei schwierigen Wetterbedingungen folgendes umfaßt: eine Bodenausrüstung mit einer Anzahl gleichmäßig längs der SLB angeordneten Blinkleuchten mit einer Strahlungswellenlänge im sichtbaren Wellenlängenbereich, eine Bordausrüstung, bestehend aus einer TV-Fernsehkamera und einer Anzeigeeinheit zur Informationsdarstellung.

Die Bodenausrüstung umfaßt weiterhin paarweise zusätzlich angeordnete Blinkleuchten mit einer entsprechenden Hochspannungsstromversorgung und Transformatoren. Die Blinkleuchten erstrecken sich ebenfalls zu beiden Seiten der Start- und Landebahn SLB.

Die Flugzeugbordausrüstung umfaßt zusätzlich einen Selektionsblock, einen Block zur Berechnung der Parameter der Flugzeugbewegung, einen Taktgeber, einen automatischen Antrieb für die TV-Kamera und einen Antriebssteuerblock sowie einen digitalen Winkelgeber und eine Bedieneinheit.

Die Primärwicklungen der Transformatoren für die Hochspannungsversorgung der Blinkleuchten sind im Stromkreis der Landebahnbefeuerung in Reihe geschaltet. Die Sekundärwicklungen der Transformatoren mit den entsprechenden Hochspannungsgleichrichtern und elektronischen Selektoren werden mit den entsprechenden Ausgängen des Blinkfrequenzgenerators verbunden.

Bordseitig erfolgt durch die TV-Kamera in Verbindung mit dem Selektionsblock und dem Taktgeber eine Synchronisation mit der Blinkfrequenz der Bodenausrüstung unter Berücksichtigung der Parameter der Flugzeugbewegung.

Die Erfindung soll nachstehend anhand eines Ausführungsbeispieles sowie unter Zuhilfenahme von Figuren näher erläutert werden.

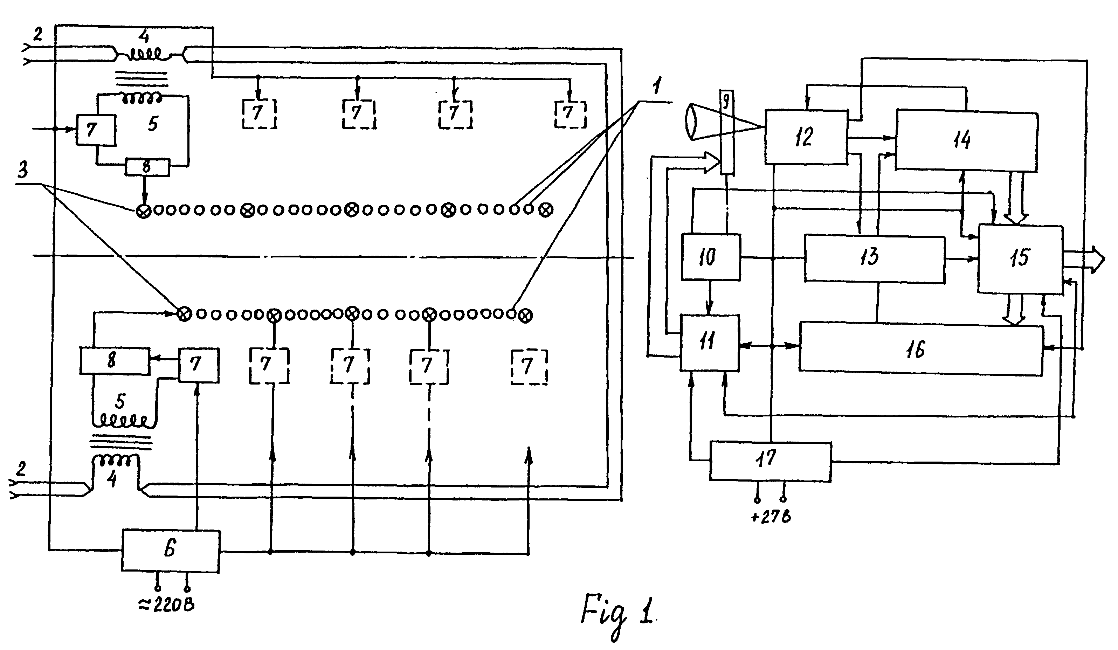

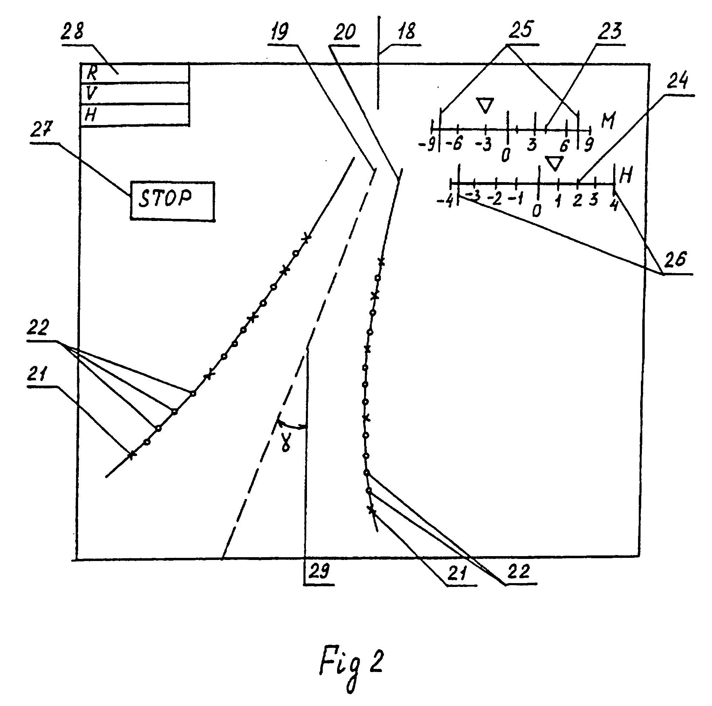

Die Fig. 1a und 1b zeigen das Funktionsschema des Flugzeugnavigationssystems. Fig. 1a stellt ein Prinzipschaltbild der Bodenausrüstung und Fig. 1b ein solches der Flugzeugbordausrüstung dar. Fig. 2 ist die prinzipielle Darstellung eines Bildes vom Monitor der Anzeigeeinheit der Flugzeugbordausrüstung mit einer Korridorlinie für Rollen, Start und Landung auf der SLB.

Zum Flugzeugnavigationssystem gehört sowohl die Bodenausrüstung als auch die Bordausrüstung, letztere installiert im Flugzeug.

Die Bodenausrüstung schließt die Landebahnbefeuerung 1 im sichtbaren Spektralbereich ein. Die Landebahnbefeuerung ist längs der SLB-Seiten angeordnet. Weiterhin ist ein Stromkreis 2 für die Speisung der Landebahnbefeuerung l'vorgesehen. Zusätzliche Blinkleuchten 3, welche im infraroten Spektralbereich Strahlung aussenden, sind paarweise längs der Seiten der Start- und Landebahn zwischen den Landebahnbefeuerungsleuchten 1 angeordnet.

Die Blinkleuchten 3 werden von entsprechenden Hochspannungsversorgungen angesteuert. Diese Hochspannungsversorgungen bestehen aus dem Hochspannungstransformator mit Primärwicklung 4 und Sekundärwicklung 5. Weiterhin ist ein Blinkfrequenzgenerator 6 vorgesehen sowie ein Selektor für die Taktsignale 7 und Hochspannungsgleichrichter 8.

Die Primärwicklung 4 des Transformators ist in Reihe zum Speisestromkreis der vorhandenen Landebahnbefeuerung, die Sekundärwicklung 5 ist zum Gleichrichter 8 über die Kontakte des elektronischen Selektors 7 geschaltet.

In der Bodenausrüstung des Flugzeugnavigationssystems sind die Primärwicklungen der Transformatoren, die als Hochspannungsquellen dienen, seriell geschaltet bezogen auf den Stromkreis für die Versorgung der vorhandenen Landebahnbefeuerung.

Die Sekundärwicklungen 5 stehen über den Hochspannungsgleichrichter 8 mit den Blinkleuchten 3 in Verbindung. Die elektronischen Selektoren 7 besitzen Eingänge, die mit den Ausgängen des Blinkfrequenzgenerators 6 verbunden sind. Ebenso besteht eine Verbindung zwischen den Selektoren 7 und dem Hochspannungsgleichrichter 8.

Die Flugzeugbordausrüstung besteht aus dem Objektiv 9 mit Antrieb und digitalem Winkelgeber 10 sowie einer Steuerschaltung 11.

Weiterhin ist eine TV-Kamera 12 mit Taktgeber 13, Selektionsblock 14 und Block 15 zur Berechnung der Parameter der Flugzeugbewegung vorgesehen. Der Block 15 enthält eine Schaltung zur Berechnung der gerasterten (gepixelten) Koordinaten. Diese Schaltung ermöglicht eine Interpolation der Lagefehler des Flugzeugkurses von der Längsachse der Start- und Landebahn und die Abstandsberechnung. Die Ausgänge des Blocks 15 sind mit der Anzeigeeinheit 16 verbunden. Weiterhin besteht eine Verbindung zwischen der Bedieneinheit 17 und dem Block 15.

Im Bordteil des Flugzeugnavigationssystems ist einer der Ausgänge der TV-Kamera 12 mit dem Selektionsblock 14 verbunden. Weitere Ausgänge der TV-Kamera 12 stehen mit dem Taktgenerator 13 und der Anzeigeeinheit 16 in Verbindung.

Einer der Ausgänge des Selektionsblocks 14 führt zum Triggereingang des Taktgenerators der TV-Kamera 12. Der Selektionsblock 14 ist an einen Eingang des Blocks 15 zur Berechnung der Parameter der Flugzeugbewegung angeschlossen. Darüber hinaus besteht eine Verbindung hin zur Steuerschaltung 11 für den Antrieb der TV-Kamera 12. Ein weiterer Ausgang des Blocks 15 zur Berechnung der Parameter der Flugzeugbewegung ist mit den entsprechenden Eingängen der Anzeigeeinheit 16 verbunden.

Ein Eingang des Blockes 15 zur Berechnung der Parameter der Flugzeugbewegung führt zum Ausgang des digitalen Winkelgebers 10. Der andere Ausgang des digitalen Winkelgebers 10 ist am zweiten Eingang der Steuerschaltung 11 für den Antrieb angeschlossen. Der Ausgang dieser Schaltung führt ein Signal hin zur Antriebswicklung des Objektivantriebes 9.

Der Ausgang des Taktgebers 13 ist mit den entsprechenden Eingängen des Selektionsblocks 14, des Blockes 15 zur Berechnung der Parameter der Flugzeugbewegung und der Anzeigeeinheit 16 verbunden.

Eingänge der Bedieneinheit 17 stehen mit der Bordstromversorgung des Flugzeuges in Verbindung. Einer der Ausgänge der Bedieneinheit 17 ist an einem der Eingänge des Blockes 15 zur Berechnung der Parameter der Flugzeugbewegung angeschlossen, wobei die anderen Ausgänge der Bedieneinheit 17 zur Stromversorgung an alle weiteren Blöcke des Bordsystems angeschlossen sind.

Ein weiterer Ausgang des Blockes 15 zur Berechnung der Parameter der Flugzeugbewegung führt zu einem Eingang eines äußeren Systems zur automatischen Kurskorrektur des Flugzeuges. Bei einer derartigen automatischen Kurskorrektur-Betriebsart wird ein dualer Code, proportional zur Kursabweichung oder Kurslage des Flugzeuges (Geschwindigkeitsektor) von der Längsachse der Start- und Landebahn an das äußere System im Flugzeug (Autopilot) übergeben und kann zur automatischen Kurskorrektur verwendet werden.

Die TV-Kamera 12 besitzt zur Umwandlung des Lichtstroms von den Blinkleuchten 3 der Bodenausrüstung eine entsprechende CCD-Anordnung und einen internen Verarbeitungsrechner.

Der Objektivantrieb 9, der digitale Winkelgeber 10 und die Antriebssteuerung dienen der Veränderung der Brennweite in Abhängigkeit von der ermittelten Entfernung zu den entsprechenden Blinkleuchtenparen 3, in diesem Falle zum nächstgelegenen Blinkleuchtenpaar bei der Landung und zum entferntesten Blinkleuchtenpaar beim Start des Flugzeuges.

Der Selektionsblock 14 hat die Aufgabe, die Signale der Blinkleuchten 3 von störendem Hintergrundrauschen zu befreien.

Der Rechner für die Flugzeugparameter (Block 15) dient der Messung der Rasterkoordinaten (der pixelbezogenen Koordinaten der CCD-Anordnung), d.h. der Abbildung der Signale von den Blinkleuchten 3. Der Rechner dient weiterhin der Ermittlung der Kursabweichung des Flugzeuges von der Längsachse der Start- und Landebahn, der Berechnung von Entfernung, Geschwindigkeit und Höhe des Flugzeuges relativ zur Start- und Landebahn sowie der Bildung eines Videosignals entsprechend der Identifikation des Korridors für Rollen, Start und Landung. Ebenfalls stellt der Rechner ein Videosignal mit einer Zeichendarstellung der Größen: Abstand, Geschwindigkeit und Höhe sowie in Skalenform der Kurslage des Flugzeuges dar. Auch wird mittels des Rechners ein Alarmsignal dann ausgegeben, wenn unzulässige Abweichungen vorliegen, so daß der Pilot des Flugzeuges gewarnt wird.

Der Rechner für die Flugzeugparameter (Block 15) stellt auch Signale für die automatische Kurskorrektur des Flugzeuges bereit.

Die Verwendung des Taktgenerators 13 gewährleistet das Erhöhen der Genauigkeit der synchronen Funktionen der im Selektionsblock 14 enthaltenen Schaltungen sowie der Funktionen im Rechner für die Parameter der Flugzeugbewegung und der Anzeigeeinheit. Mittels des Taktgenerators wird ein einheitliches Netz von Stützfrequenzen und Synchronisiersignalen vorgegeben.

Die Anzeigeeinheit ermöglicht eine Visualisierung der Korridore für Rollen, Start und Landung und ebenfalls der Lageparameter des Flugzeuges relativ zum Rollweg und zur Start- und Landebahn.

Die Funktionsweise des Flugzeugnavigationssystems wird nachstehend beschrieben.

In einer Rolletappe wird das Flugzeugnavigationssystem bei meteorologischen Sichtweiten Rmdw entsprechend Landekategorie ICAO3, Entscheidungshöhe gleich 200m, durch Anschalten des Blinkfrequenzgenerators 6 und des Bordteiles des Systems eingeschaltet.

Unter Berücksichtigung, daß die Länge der Rollwege im allgemeinen einige hundert Meter nicht überschreitet, werden die Blinkleuchten 3 längs der Rollwege paarweise mit einem Abstand von 50 bis 100m angeordnet, wobei die Blinkleuchten auch mit verminderter Leistung arbeiten können, was durch Absenkung der Speisespannung im Stromkreis 2 erreichbar ist.

Beim Bewegen des Flugzeuges auf dem Rollweg bildet die TV-Kamera 12 für den Piloten einen Rollkorridor. Im Falle einer Kursabweichung von der Achslinie des Rollweges wird ein Warnsignal ausgelöst. In dieser Etappe ist eine Messung von Abstand und Geschwindigkeit nicht notwendig, da der Pilot bei fehlendem visuellen Kontakt nur daran interessiert ist, Informationen darüber zu erhalten, ob sich das Flugzeug so bewegt, daß eine Hindernisberührung ausgeschlossen werden kann.

In einer Startetappe wird das Flugzeugnavigationssystem ähnlich den oben genannten Bedingungen eingeschaltet, wobei gleichzeitig die Blinkleuchten auf vollen Betrieb aktiviert werden.

Die Fernsehkamera des Flugzeuges nimmt die gesamte Szene im Gesichtsfeld auf und wandelt das entsprechende Bild in ein Videosignal um. Der Selektionsblock 14 filtert nur die Signale heraus, die von den Blinkleuchten herrühren, wobei eines der aufgenommenen Signale an den Triggereingang des Taktgebers der TV-Kamera 12 gegeben wird. Hierdurch ist sichergestellt, daß die Visualisierung der Start- und Landebahn durch Projizieren der Abbilder von den Blinkleuchten 3 nur während der aktiven Bildabtastung erfolgt. Das Takten des Synchrongenerators in der TV-Kamera 12 mit den Signalen von den Blinkleuchten 3 gewährleistet einerseits die erforderliche Arbeitsgenauigkeit für die Übereinstimmung der Frequenzen im Blinkgenerator 6 mit der Abtastfrequenz der TV-Kamera 12; andererseits entfällt dadurch die Notwendigkeit einer zusätzlichen Funkübertragung eines Synchronsignals zwischen Blinkfrequenzgenerator 6 und TV-Kamera 12.

In der Startetappe wird die Brennweite F des Objektivs 9 auf minimal eingestellt und bleibt konstant. (Durch Drücken eines Knopfes "Start" auf dem Bedienfeld 17 wird die Antriebssteuerung 11 abgeschaltet, wobei sich hier F gleich konstant einstellt.)

Das analoge Videosignal am Ausgang der TV-Kamera 12 gelangt hin zum Taktgeber 13, welcher aus diesem eine Gruppe von Taktfrequenzen und Synchronisationssignalen bildet, die zum Takten des Selektionsblocks 14, des Rechners für die Parameter der Flugzeugbewegung (Block 15) und der Anzeigeeinheit 16 notwendig sind.

Am Ausgang des Selektionsblocks 14 liegt ein digitaler Signalstrom an, der den Signalen von den Blinkleuchten 3 entspricht. Dieser Signalstrom wird an den Rechner für die Parameter der Flugzeugbewegung (Block 15) weitergegeben. Dieser Rechner bestimmt die Raster- oder Pixelkoordinaten aller beobachteten Signale und berechnet durch Ermitteln dieser Werte die Rasterkoordinaten der Pixel zwischen den Signalabbildungen von den Blinkleuchten. Hieraus werden Videosignale mit einem Zeitintervall von ca. 1 sec erstellt. Eine Kombination dieser Videosignale, die zeitlich jeweils nach jedem Impuls der Blinkleuchten 3 aktualisiert werden, dient der Darstellung der Abbildung des Startkorridors auf der Anzeigeeinheit 16, die ein Farbdisplay sein kann. Ebenso wird mittels Interpolation die Kursabweichung des Flugzeuges von der Mittelachse der Start- und Landebahn bestimmt, wobei die berechnete Abweichung durch einen Hilfsindex in Skalenanzeigen für Winkel- und Parallelabweichung realisierbar ist.

Der diesen Skalenanzeigen oder Skalenwerten entsprechende Zahlenwert der Kursabweichung, der Index, aber auch die Werte für den Abstand zum entferntesten Blinkleuchtenpaar und die Geschwindigkeit des Flugzeuges werden ebenfalls auf dem Displaybild der Anzeigeeinheit 16 dargestellt. Das darzustellende Signal wird noch mit den Analogsignalen von der Kamera 12 gemischt. Hierdurch kann der Pilot des Flugzeuges aus der Displayinformation die gesamte Startbahnszene bis hin zu den Flugplatzgrenzen beobachten, auch wenn ein Teil oder Fragmente durch Nebel visuell nicht beobachtbar sind. Gleichzeitig kann der Pilot auf Wunsch die zusätzliche Analoganzeige in dem Videosummensignal durch Betätigung eines entsprechenden Schalters ausschalten, so daß seine Aufmerksamkeit nur der Abbildung des Start- und Landekorridors und den erforderlichen alphanumerischen Informationen gewidmet werden muß.

Die Anzeigeeinheit 16 erzeugt auch ein Warnsignal oder stellt dieses graphisch dar, wenn eine Abweichungsgröße einen vorgegebenen Wert überschreitet und wenn der Abstand zum Ende der Start- und Landebahn für einen erfolgreichen Abschluß des Manövers nicht mehr ausreicht.

In der Landeetappe ist die Wechselwirkung zwischen den Blöcken des Bodenteils und der Bordausrüstung die gleiche wie in der Startetappe. Jedoch wirkt in dieser Phase der Mechanismus zur Änderung der Brennweite F des Objektivs, und zwar geregelt vom entsprechenden Antrieb in der nachfolgend beschriebenen Weise.

Durch Drücken eines Knopfes "Landung" auf der Bedieneinheit 17 wird ein entsprechendes Signal zum Antriebssteuerblock 11 freigeschaltet. Beginnend in einigem Abstand vom Längsseiten-Blinkleuchtenpaar, z.B. von ca. 1,5 km, wird ein vorher berechneter Vorgabewert der Brennweite F als Funktion der Schrägentfernung an die Antriebssteuerschaltung 11 übergeben. Einem weiteren Eingang wird der aus dem digitalen Winkelgeber 10 ausgelesene Wert der Brennweite F übermittelt. Im Ergebnis bildet die Antriebssteuerschaltung 11 ein Abgleichsignal, welches in eine Steuerspannung umgewandelt auf die entsprechende Wicklung des Objektivantriebes zum Herbeiführen eines Abgleiches gegeben wird. In dieser Landeetappe errechnet die Abstandsmeßschaltung auch Geschwindigkeit und Höhe des Flugzeuges. Außerdem liegt an einem der Ausgänge des Rechners für die Parameter der Flugzeugbewegung (Block 15) in einem dualen Code der berechnete Wert der Kursabweichung des Flugzeuges von der Achsenlinie der Start- und Landebahn an, was in der Startund Landeetappe für eine automatische Kurskorrektur zur Nutzung entsprechender weiterer Bordsysteme sinnvoll ist.

## Patentansprüche

1. Flugzeugnavigationssystem mit TV-Kamera für Rollen, Start und Landung insbesondere bei schwierigen Wetterbedingungen, bestehend aus einer Bodenausrüstung mit einer Anzahl äquidistant längs beider Seiten einer Start- und Landebahn angeordneten Blinkleuchten und einer Flugzeugbordausrüstung enthaltend die TV-Kamera und eine Anzeigeeinheit zur Informationsdarstellung, **dadurch gekennzeichnet,**
**daß** in der Bodenausrüstung zusätzlich Blinkleuchten paarweise angeordnet sind, welche einen bezogen auf die übrigen Blinkleuchten erweiterten Arbeitswellenlängenbereich aufweisen, wobei diese zusätzlichen Blinkleuchten mit einem Blinkfrequenzgenerator und einer entsprechenden Stromversorgung verbunden sind,
**daß** in der Flugzeugbordausrüstung ein Selektionsblock vorhanden ist, der mit einem Taktgeber, z.B. einer Synchronisationsbaugruppe, für die TV-Kamera verbunden ist, wobei die TV-Kamera im erweiterten Arbeitswellenlängenbereich der zusätzlich angeordneten paarweisen Blinkleuchten selektiv ist und
**daß** durch die empfangenen Signale herrührend von den zusätzlichen paarweisen Blinkleuchten eine Triggerung des Taktgebers erfolgt, und
**daß** weiterhin über eine Bestimmung der Parameter der Flugzeugbewegung das Objektiv der TV-Kamera zur Fokussierung automatisch ansteuerbar ist.

## Claims

1. An aircraft navigation system with a TV camera for taxiing, take-off and landing, in particular under difficult weather conditions, comprising ground equipment with a plurality of flashing lights arranged equidistantly along both sides of a take-off and landing strip and airborne equipment containing the TV camera and a display unit for information display,
**characterized in that**
flashing lights, which have an operational wavelength range widened with respect to the other flashing lights, are arranged in pairs in the ground equipment, wherein these additional flashing lights are connected to a flashing frequency generator and a suitable current supply,
a selection block, which is connected to a clock unit, for example a synchronization subassembly for the TV camera, is present in the airborne equipment, wherein the TV camera is selective in the widened operational wavelength range of the flashing lights additionally arranged in pairs, and the clock unit is triggered by the signals received resulting from the additional flashing lights in pairs,
and, furthermore, the lens of the TV camera can be actuated automatically for focusing by determining the parameters of the aircraft movement.

## Revendications

1. Système de navigation aéronautique avec caméra TV pour le roulement au sol, le décollage et l'atten-issage, en particulier en présence de conditions météorologiques difficiles, comprenant un équipement au sol, comprenant un certain nombre de feux clignotants disposés à égale distance le long des deux côtés d'une piste de décollage et d'atterrissage, et un équipement embarqué sur l'avion comportant la caméra TV et un écran destiné à afficher les informations, **caractérisé**
**en ce que** l'équipement au sol comporte des feux Glgnotants supplémentaires disposés par paires, qui présentent une gamme d'ondes signaux élargie par rapport à celle des autres feux clignotants, ces feux clignotants supplémentaires étant reliés à un émetteur de fréquence de clignotement et à une alimentation en courant correspondante,
**en ce qu'**un bloc de sélectivité est monté dans l'équipement embarqué, lequel est relié à un générateur de rythme, tel qu'une unité de synchronisation, destiné à la caméra TV, la caméra TV étant sélective dans la gamme d'ondes signaux élargie des feux clignotants supplémentaires disposés par paires et
**en ce que** le générateur de rythme est déclenché par les signaux captés, qui ont été émis par les feux clignotants supplémentaires disposés par paires, et
**en ce que**, par ailleurs, par l'intermédiaire d'une détermination des paramètres du mouvement de l'avion, l'objectif de la caméra TV peut être commandé automatiquement en vue d'une focalisation.
